# EUROPEAN PATENT APPLICATION

(11) **EP 4 576 779 A1**
(43) Date of publication of application: **25.06.2025**
(21) Application number: 22955350.8
(22) Date of filing: 18.08.2022
(51) Int. Cl.: H04N 19/52

(54) **PRECODING METHOD AND APPARATUS BASED ON RECONFIGURABLE INTELLIGENT SURFACE**

(71) Applicant: Beijing Xiaomi Mobile Software Co., Ltd., Beijing 100085 (CN)
(72) Inventor: CHI, Liangang, Beijing 100085 (CN)
(74) Representative: Gunzelmann, Rainer
(86) International application number: PCT/CN2022/113378
(87) International publication number: WO 2024/036570

(57) **Abstract**

Disclosed in the present application are a precoding method and apparatus based on a reconfigurable intelligent surface, the method comprising: sending a reference signal to a terminal device, wherein the reference signal is used by the terminal device to determine channel feedback information, and the channel feedback information is used by a second network device to determine first indication information; receiving the first indication information, which is sent by the second network device, wherein the first indication is used for determining a phase-shift matrix of a first network device; and determining the phase-shift matrix of the first network device according to the first indication information, such that a base station can control the precoding of a reconfigurable intelligent surface on the basis of channel information.

## Description

### FIELD

The present application relates to the field of communication technology and, in particular, to a method and apparatus for precoding based on a reconfigurable intelligent surface.

### BACKGROUND

The wireless environment in conventional communications is an uncontrollable factor, and its uncontrollability usually has a negative effect on the efficiency of communications and can degrade the quality of service. For example, signal attenuation limits the propagation distance of wireless signals, multipath effects lead to fading phenomena, and reflections and refractions from large objects are major uncontrollable factors. Deploying Reconfigurable Intelligent Surface (RIS) on the surfaces of various types of objects in the wireless transmission environment is expected to break through the uncontrollability of the conventional wireless channel, build intelligent programmable wireless, and introduce a new paradigm for future wireless communication.

### SUMMARY

Embodiments of a first aspect of the present application provide a method for precoding based on a reconfigurable intelligent surface, performed by a first network device, including:
sending a reference signal to a terminal device, in which the reference signal is configured for the terminal device to determine channel feedback information, and the channel feedback information is configured for a second network device to determine first indication information;
receiving the first indication information sent by the second network device, in which the first indication information is configured to determines a phrase shift matrix of the first network device; and
determining the phrase shift matrix of the first network device according to the first indication information.

Embodiments of a second aspect of the present application provide a method for precoding based on a reconfigurable intelligent surface, performed by a second network device, including:
receiving channel feedback information sent by a terminal device, in which the channel feedback information is determined by the terminal device based on a reference signal sent by a first network device, and the channel feedback information is configured to determine first indication information; and
sending the first indication information to the first network device, in which the first indication information is configured to determine a phrase shift matrix of the first network device.

Embodiments of a third aspect of the present application provide a method for precoding based on a reconfigurable intelligent surface, performed by a terminal device, including:
receiving a reference signal sent by a first network device;
estimating a channel between the first network device and the terminal device based on the reference signal and obtaining channel feedback information; and
sending the channel feedback information to a second network device, in which the channel feedback information is configured to determine first indication information, and the first indication information is configured to determine a phrase shift matrix of the first network device.

Embodiments of a fourth aspect of the present application provide an apparatus for precoding based on a reconfigurable intelligent surface, applied to a first network device, including:
a transceiver unit configured to send a reference signal to a terminal device, in which the reference signal is configured for the terminal device to determine channel feedback information, and the channel feedback information is configured for a second network device to determine first indication information;
the transceiver unit being further configured to receive the first indication information sent by the second network device, in which the first indication information is configured to determines a phrase shift matrix of the first network device; and
a processing unit configured to determine the phrase shift matrix of the first network device according to the first indication information.

Embodiments of a fifth aspect of the present application provide an apparatus for precoding based on a reconfigurable intelligent surface, applied to a second network device, including:
a transceiver unit configured to receive channel feedback information sent by a terminal device, in which the channel feedback information is determined by the terminal device based on a reference signal sent by a first network device, and the channel feedback information is configured to determine first indication information; and
the transceiver unit being further configured to send the first indication information to the first network device, in which the first indication information is configured to determine a phrase shift matrix of the first network device.

Embodiments of a sixth aspect of the present application provide an apparatus for precoding based on a reconfigurable intelligent surface, applied to a terminal device, including:
a transceiver unit configured to receive a reference signal sent by a first network device; and
a processing unit configured to estimate a channel between the first network device and the terminal device based on the reference signal and obtaining channel feedback information;
the transceiver unit being further configured to send the channel feedback information to a second network device, in which the channel feedback information is configured to determine first indication information, and the first indication information is configured to determine a phrase shift matrix of the first network device.

Embodiments of a seventh aspect of the present application provide a communication device, including a processor and a memory. The memory has a computer program stored therein, the processor executes the computer program stored in the memory to cause the device to perform the method for precoding based on a reconfigurable intelligent surface described in embodiments of the first aspect, or the method for precoding based on a reconfigurable intelligent surface described in embodiments of the second aspect.

Embodiments of an eighth aspect of the present application provide a communication device, including a processor and a memory. The memory has a computer program stored therein, the processor executes the computer program stored in the memory to cause the device to perform the method for precoding based on a reconfigurable intelligent surface described in embodiments of the third aspect, or the method for precoding based on a reconfigurable intelligent surface described in embodiments of the fourth aspect.

Embodiments of a ninth aspect of the present application provide a communication device, including a processor and an interface circuit. The interface circuit is configured to receive code instructions and transmit the code instructions to the processor, and the processor is configured to run the code instructions to cause the device to perform the method for precoding based on a reconfigurable intelligent surface described in embodiments of the first aspect, or the method for precoding based on a reconfigurable intelligent surface described in embodiments of the second aspect.

Embodiments of a tenth aspect of the present application provide a communication device, including a processor and an interface circuit. The interface circuit is configured to receive code instructions and transmit the code instructions to the processor, and the processor is configured to run the code instructions to cause the device to perform the method for precoding based on a reconfigurable intelligent surface described in embodiments of the third aspect.

Embodiments of an eleventh aspect of the present application provide a computer-readable storage medium configured to store instructions that, when the instructions are executed, cause the method for precoding based on a reconfigurable intelligent surface described in embodiments of the first aspect to be implemented, or cause the method for precoding based on a reconfigurable intelligent surface described in embodiments of the second aspect to be implemented.

Embodiments of a twelfth aspect of the present application provide a computer-readable storage medium configured to store instructions that, when the instructions are executed, cause the method for precoding based on a reconfigurable intelligent surface described in embodiments of the third aspect to be implemented.

Embodiments of a thirteenth aspect of the present application provide a computer program that, when run on a computer, causes the computer to perform the method for precoding based on a reconfigurable intelligent surface described in embodiments of the first aspect, or to perform the method for precoding based on a reconfigurable intelligent surface described in embodiments of the second aspect.

Embodiments of a fourteenth aspect of the present application provide a computer program that, when run on a computer, causes the computer to perform the method for precoding based on a reconfigurable intelligent surface described in embodiments of the third aspect.

In the method and apparatus for precoding based on the reconfigurable intelligent surface provided in embodiments of the present application, the reference signal is sent to the terminal device, in which the reference signal is configured for the terminal device to determine the channel feedback information, and the channel feedback information is configured for the second network device to determine the first indication information; the first indication information sent by the second network device is received, in which the first indication information is configured to determine the phrase shift matrix of the first network device; and the phrase shift matrix of the first network device is determined according to the first indication information, such that a base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

Additional aspects and advantages of the present application will be given in part in the following descriptions, become apparent in part from the following descriptions, or be learned from the practice of the present application.

### BRIEF DESCRIPTION OF THE DRAWINGS

In order to more clearly illustrate the technical solutions in the embodiments or background art of the present application, the accompanying drawings to be used in the embodiments or background art of the present application are described below.
FIG. 1 is a schematic diagram of an architecture of a communication system provided by an embodiment of the present application;
FIG. 2 is a flow chart of a method for precoding based on a reconfigurable intelligent surface provided by an embodiment of the present application;
FIG. 3 is a flow chart of a method for precoding based on a reconfigurable intelligent surface provided by an embodiment of the present application;
FIG. 4 is a flow chart of a method for precoding based on a reconfigurable intelligent surface provided by an embodiment of the present application;
FIG. 5 is a flow chart of a method for precoding based on a reconfigurable intelligent surface provided by an embodiment of the present application;
FIG. 6 is a flow chart of a method for precoding based on a reconfigurable intelligent surface provided by an embodiment of the present application;
FIG. 7 is a flow chart of a method for precoding based on a reconfigurable intelligent surface provided by an embodiment of the present application;
FIG. 8 is a flow chart of a method for precoding based on a reconfigurable intelligent surface provided by an embodiment of the present application;
FIG. 9 is a flow chart of a method for precoding based on a reconfigurable intelligent surface provided by an embodiment of the present application;
FIG. 10 is a flow chart of a method for precoding based on a reconfigurable intelligent surface provided by an embodiment of the present application;
Fig. 11 is a block schematic diagram of an apparatus for precoding based on a reconfigurable intelligent surface provided by an embodiment of the present application;
Fig. 12 is a block schematic diagram of an apparatus for precoding based on a reconfigurable intelligent surface provided by an embodiment of the present application;
Fig. 13 is a block schematic diagram of an apparatus for precoding based on a reconfigurable intelligent surface provided by an embodiment of the present application;
Fig. 14 is a block schematic diagram of an apparatus for precoding based on a reconfigurable intelligent surface provided by an embodiment of the present application; and
FIG. 15 is a block schematic diagram of a chip provided by an embodiment of the present application.

### BRIEF DESCRIPTION OF THE DRAWINGS

Illustrative embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with the present application. On the contrary, they are merely examples of a device and a method consistent with some aspects of the present application, as elaborated in the appended claims.

The terms used in the present application are only for purpose of description of particular embodiments, and are not intended to limit the present application. The singular form "a", and "the" used in the present application and the appended claims is also intended to include the plural form, unless other meanings are explicitly expressed in the context. It should be understood that, the term "and/or" used herein refers to include any or all of the possible combinations of one or a plurality of listed related items.

It should be understood that, although the terms "first", "second", "third" may be employed by the present application to describe various information, these information should not limited by these terms. These terms are only used to distinguish the information of the same type from each other. For example, first information may be referred to as second information without departing from the scope of the present application, and similarly, the second information may also be referred to as the first information. Depending on the context, the word "if" and "as long as" used herein may be interpreted as "when...", "upon..." or "in response to determination".

Embodiments of the present application will be described in detail and examples of the embodiments will be illustrated in the drawings, where same or similar reference numerals are used to indicate same or similar elements. The embodiments described herein with reference to drawings are explanatory, illustrative, and intended to generally understand the present application. The embodiments shall not be construed to limit the present application.

In order to better understand a method for precoding based on a reconfigurable intelligent surface disclosed in embodiments of the present application, a communication system to which embodiments of the present application apply is first described below.

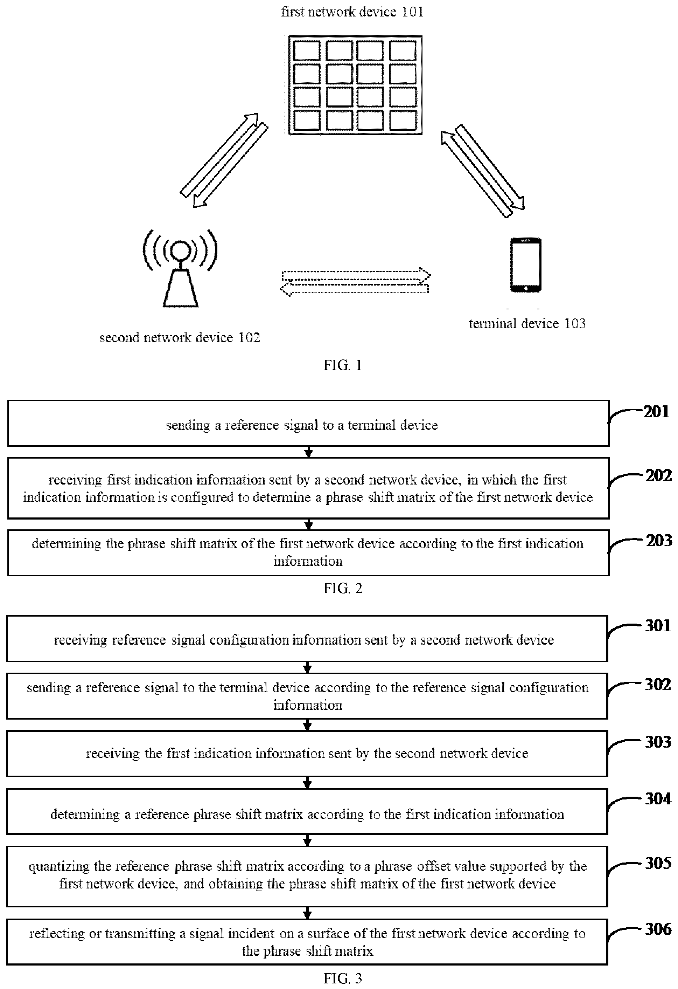

Please refer to FIG. 1 and FIG. 1 is a schematic diagram of an architecture of a communication system provided by an embodiment of the present application. The communication system may include, but is not limited to, a first network device, a second network device and a terminal device, and the number and form of the devices shown in FIG. 1 are for illustrative purposes only and do not constitute a limitation of the embodiments of the present application, which may include two or more network devices and two or more terminal devices in practical applications. For example, the communication system illustrated in FIG. 1 includes one first network device 101, one second network device 102, and one terminal device 103.

It should be noted that the technical solutions of the embodiments of the present application can be applied to various communication systems. Examples include long term evolution (LTE) systems, fifth generation mobile communication systems, 5G new radio systems, or other future new mobile communication systems.

The first network device 101 in embodiments of the present application is a device capable of regulating a communication channel. The first network device 101 is equipped with a large number of (electromagnetic) units and is capable of changing the radiation characteristics of the (electromagnetic) units by adjusting the physical properties of the (electromagnetic) units (e.g., capacitive reactance, impedance, or inductive reactance), which in turn allows for dynamic regulation of the electromagnetic waves in space in order to form beams of waves with a specific direction in space. For example, the first network device 101 may be a reconfigurable intelligent surface (RIS) or the like. In embodiments of the present application, the (electromagnetic) unit in the first network device 101 may be active or passive; it may be that part of the (electromagnetic) unit in the first network device 101 is active and part of the (electromagnetic) unit is passive.

The second network device 102 in embodiments of the present application is an entity on the network side used to transmit or receive signals. For example, the second network device 102 may be an Evolved NodeB (eNB), a Transmission Reception Point (TRP), a Next Generation NodeB (gNB) in an NR system, a base station in other future mobile communication systems, or an access node in a Wireless Fidelity (WiFi) system, among others. The embodiments of the present application do not limit the specific technology and specific device form used in the access network device. The access network device provided by embodiments of the present application may be composed of a Centralized Unit (CU) and a Distributed Unit (DU), in which the CU may also be referred to as a Control Unit, and the use of the CU-DU structure may split the protocol layer of the access network device, such as a base station. Some of the protocol layer functions are placed in the CU for centralized control, and some or all of the remaining protocol layer functions are distributed in the DU, which is centrally controlled by the CU.

The terminal device 103 in embodiments of the present application is an entity on the user side used to receive or transmit signals, such as a mobile phone. The terminal device can also be referred to as a terminal, user equipment (UE), mobile station (MS), mobile terminal (MT) and so on. The terminal device may be a vehicle with communication function, a smart vehicle, a mobile phone, a wearable device, a tablet computer (Pad), a computer with wireless transceiving function, a virtual reality (VR) terminal device, an augmented reality (AR) terminal device, a wireless terminal device for industrial control, a wireless terminal device for self-driving, a wireless terminal device for remote medical surgery, a wireless terminal device for smart grid, a wireless terminal device for transportation security, a wireless terminal device for smart city, a wireless terminal device for smart home, and so on. The embodiments of the present application do not limit the specific technology and the specific device form used for the terminal device.

The wireless environment in conventional communications is an uncontrollable factor, and its uncontrollability usually has a negative effect on the efficiency of communications and can degrade the quality of service. For example, signal attenuation limits the propagation distance of wireless signals, multipath effects lead to fading phenomena, and reflections and refractions from large objects are major uncontrollable factors. Deploying Reconfigurable Intelligent Surface (RIS) on the surfaces of various types of objects in the wireless transmission environment is expected to break through the uncontrollability of the conventional wireless channel, build intelligent programmable wireless, and introduce a new paradigm for future wireless communication. Specifically, the RIS may reflect or transmit a signal incident on its surface in a particular direction by precoding technology, enhancing the strength of the signal at the receiving end or reducing interference, and achieving control of the channel.

As illustrated in FIG. 1, in the communication system assisted by the first network device 101 (RIS), the second network device 102 reflects or transmits a signal to the terminal device 103 through the first network device 101 (RIS), or the terminal device 103 reflects or transmits a signal to the second network device 102 through the first network device 101 (RIS). Precoding of the first network device 101 is required to enhance the power of the useful signal and to reduce interference.

The related art has a high complexity of methods for determining the precoding of the first network device 101 (RIS).

It may be understood that the communication system described in embodiments of the present application is intended to more clearly illustrate the technical solutions of the embodiments of the present application, and does not constitute a limitation on the technical solutions provided by the embodiments of the present application, and a person of ordinary skill in the art may know that, with the evolution of the system architecture and the emergence of new business scenarios, the technical solutions provided by the embodiments of the present application are equally applicable to similar technical problems.

A method and apparatus for precoding based on a reconfigurable intelligent surface provided in the present application are described in detail below in conjunction with the accompanying drawings.

Please refer to FIG. 2, and FIG. 2 is a flow chart of a method for precoding based on a reconfigurable intelligent surface provided by an embodiment of the present application. It should be noted that a method for precoding based on a reconfigurable intelligent surface of the embodiments of the present application is performed by a first network device. The method may be performed independently or in conjunction with any of the other embodiments of the present application. As illustrated in FIG. 2, the method may include following steps.

In step 201, a reference signal is sent to a terminal device.

In embodiments of the present application, the first network device may be a reconfigurable intelligent surface (RIS).

In embodiments of the present application, the first network device can send the reference signal, the reference signal is configured for the terminal device to determine channel feedback information, and the channel feedback information is configured for the second network device to determine first indication information.

The reference signal is configured for the terminal device to estimate a channel between the first network device and the terminal device to obtain the channel feedback information. That is, the terminal device, after receiving the reference signal sent by the first network device, can perform channel estimation based on the reference signal to obtain the channel feedback information of the channel between the first network device and the terminal device.

The channel feedback information is configured for the second network device to determine the first indication information based on the channel feedback information.

In some embodiments, the first indication information is determined by the second network device based on incidence angle information between the second network device and the first network device and the channel feedback information sent by the terminal device.

The incidence angle information between the second network device and the first network device is information about an angle of incidence at which a signal from the second network device is incident on a surface of the first network device. The channel feedback information sent by the terminal device is sent by the terminal device to the second network device and is capable of providing feedback on information of the channel between the first network device and the terminal device.

In some embodiments, the first indication information is determined by the second network device based on the channel feedback information sent by the terminal device.

In embodiments of the present application, optionally, the channel feedback information includes at least one of:
second indication information, in which the second indication information includes a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

In some embodiments, the first network device can receive reference signal configuration information sent by the second network device, and send the reference signal according to the reference signal configuration information. The reference signal can be configured for the terminal device to determine the channel feedback information.

Optionally, the reference signal configuration information includes at least one of:
a unit in the first network device occupied by the reference signal;
generation information of a sequence of the reference signals;
a serial number of an antenna port occupied by the reference signal; or
a time and frequency resource occupied by the reference signal.

In some embodiments, optionally, the reference signal may also be sent to the second network device, etc.

It could be understood that, in embodiments of the present application, the first network device may have a portion of active units, can send the reference signal to the terminal device in accordance with the reference signal configuration information.

In step 202, first indication information sent by a second network device is received, in which the first indication information is configured to determine a phrase shift matrix of the first network device.

In embodiments of the present application, the first network device can receive the first indication information sent by the second network device, determine the phase shift matrix of the first network according to the first indication information, and then reflect or transmit the signal incident on the surface of the first network device according to the phase shift matrix to realize the precoding based on the reconfigurable intelligent surface.

The phase shift matrix of the first network device is used to configure a phase of each unit in the first network device, that is, to precode the first network device. The first network device can configure and adjust the phase of each of its own units according to the phase shift matrix to realize the precoding of the first network device.

In embodiments of the present application, the first network device can determine a reference phase shift matrix according to the first indication information. In turn, the first network device can quantize the reference phase shift matrix according to its own supported phase shift values to obtain the phase shift matrix (i.e., the phase shift matrix that is ultimately actually used) of the first network device.

It could be understood that the phase offset values supported by the first network device are several discrete values, rather than continuous, and the phase of each unit in the first network device is not continuously adjustable.

It should be noted that the reference phase shift matrix is determined according to the first indication information sent by the second network device, and the first indication information is generated by the second network device based on the assumption that the phase of each unit in the first network device is continuously adjustable, that is, the phase of each unit in the first network device correspondingly configured by the reference phase shift matrix may not be supported by the first network device. Thus, the first network device can quantize the reference phase shift matrix according to its own supported phase offset values to obtain the phase shift matrix of the first network device.

In embodiments of the present application, the first indication information includes at least one first precoding matrix indicator (PMI), and a weighting coefficient corresponding to each first PMI.

It could be understood that if the first indication information only includes one first PMI, the weighting coefficient corresponding to the first PMI is 1.

It could be understood that the first PMI included in the first indication information is configured to determine the phase shift matrix of the first network device.

Optionally, the weighting coefficient may be a real number or a complex number. The weighting coefficient is a complex number, indicating that information of magnitude and phase is included in the weighting coefficient.

In some embodiments, the first indication information is determined by the second network device based on incidence angle information between the second network device and the first network device and the channel feedback information sent by the terminal device.

The incidence angle information between the second network device and the first network device is information about an angle of incidence at which a signal from the second network device is incident on a surface of the first network device. The channel feedback information sent by the terminal device is sent by the terminal device to the second network device and is capable of providing feedback on information of the channel between the first network device and the terminal device.

In some embodiments, the first indication information is determined by the second network device based on the channel feedback information sent by the terminal device.

In embodiments of the present application, the first network device may determine, according to a protocol pre-specification or a configuration indication of the second network device, whether the determination of the first indication information takes into account incidence angle information between the second network device and the first network device.

In step 203, the phrase shift matrix of the first network device is determined according to the first indication information.

In embodiments of the present application, the first network device can determine the phase shift matrix of the first network device according to the received first indication information, and then configure and adjust the phase of each unit according to the phase shift matrix to reflect or transmit the signal incident on the surface of the first network device.

In some embodiments, the first indication information is determined by the second network device based on incidence angle information between the second network device and the first network device and the channel feedback information sent by the terminal device.

As a possible implementation, the first indication information is determined by the second network device based on the incidence angle information between the second network device and the first network device and the channel feedback information sent by the terminal device, the first indication information includes one first precoding matrix indicator (PMI), and the first network device determines a precoding matrix correspondingly indicated by the first PMI as the reference phase shift matrix.

As another possible implementation, the first indication information is determined by the second network device based on the incidence angle information between the second network device and the first network device and the channel feedback information sent by the terminal device, and the first indication information includes a plurality of first precoding matrix indicators (PMIs) and a weighting coefficient corresponding to each first PMI, the first network device can perform weighted combination of a precoding matrix correspondingly indicated by each first PMI according to the weighting coefficient corresponding to each first PMI to obtain the reference phase shift matrix.

In some embodiments, the first indication information is determined by the second network device based on the channel feedback information sent by the terminal device.

As a possible implementation, the first indication information is determined by the second network device based on the channel feedback information sent by the terminal device, the first indication information includes one first precoding matrix indicator (PMI), and the first network device can determine the reference phase shift matrix according to the precoding matrix and the weighting coefficient corresponding to the first PMI, and the incidence angle information between the second network device and the first network device.

Optionally, the first network device can adjust the precoding matrix correspondingly indicated by the first PMI based on the incidence angle information between the second network device and the first network device to obtain the reference phase shift matrix.

As another possible implementation, the first indication information is determined by the channel feedback information sent by the terminal device, the first indication information includes a plurality of first precoding matrix indicators (PMIs) and a weighting coefficient corresponding to each first PMI, and the first network device can determine the reference phase shift matrix according to the precoding matrix and the weighting coefficient corresponding to each first PMI in the plurality of first PMIs and the incidence angle information between the second network device and the first network device.

Optionally, the first network device can perform weighted combination of the precoding matrix correspondingly indicated by each first PMI in accordance with the weighting coefficient corresponding to each first PMI to obtain a first matrix, and adjust the first matrix based on the incidence angle information between the second network device and first network device, to obtain the reference phase shift matrix.

Optionally, the incidence angle information between the second network device and the first network device may be sent by the second network device to the first network device, or may be perceived and measured by the first network device itself.

It could be understood that when performing the weighted combination, the weighting coefficient used for the precoding matrix correspondingly indicated by each first PMI is the weighting coefficient corresponding to the first PMI indicative of the precoding matrix.

In embodiments of the present application, the first network device, after determining the phase shift matrix, can configure and adjust the phase of each unit in the first network device according to the phase shift matrix, and reflect or transmit the signal incident on the surface of the first network device based on the adjusted phase.

In summary, the reference signal is sent to the terminal device; the first indication information sent by the second network device is received, in which the first indication information is configured to determine the phrase shift matrix of the first network device; and the phrase shift matrix of the first network device is determined according to the first indication information, such that the base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

Please refer to FIG. 3, and FIG. 3 is a flow chart of a method for precoding based on a reconfigurable intelligent surface provided by an embodiment of the present application. It should be noted that a method for precoding based on a reconfigurable intelligent surface of the embodiments of the present application is performed by a first network device. The method may be performed independently or in conjunction with any of the other embodiments of the present application. As illustrated in FIG. 3, the method may include following steps.

In step 301, reference signal configuration information sent by a second network device is received.

In embodiments of the present application, the first network device may be a reconfigurable intelligent surface (RIS).

In embodiments of the present application, the first network device can receive the reference signal configuration information sent by the second network device, and determine the reference signal to be sent according to the reference signal configuration information.

Optionally, the reference signal configuration information includes at least one of:
a unit in the first network device occupied by the reference signal;
generation information of a sequence of the reference signals;
a serial number of an antenna port occupied by the reference signal; or
a time and frequency resource occupied by the reference signal.

The first network device can determine the reference signal to be sent according to the reference signal configuration information.

In step 302, a reference signal is sent to a terminal device according to the reference signal configuration information.

In embodiments of the present application, the first network device may determine the reference signal according to the received reference signal configuration information, and send the reference signal to the terminal device.

The reference signal is configured for the terminal device to estimate a channel between the first network device and the terminal device to obtain the channel feedback information. That is, the terminal device, after receiving the reference signal sent by the first network device, can perform channel estimation based on the reference signal to obtain the channel feedback information of the channel between the first network device and the terminal device.

In embodiments of the present application, optionally, the channel feedback information includes at least one of:
second indication information, in which the second indication information includes a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

Additionally, it could be understood that in embodiments of the present application, the first network device may have a portion of active units, can send the reference signal to the terminal device in accordance with the reference signal configuration information.

In step 303, first indication information sent by the second network device is received.

In embodiments of the present application, the first network device can receive the first indication information sent by the second network device, and the first indication information includes at least one first PMI, and a weighting coefficient corresponding to each first PMI.

It could be understood that if the first indication information only includes one first PMI, the weighting coefficient corresponding to the first PMI is 1.

It could be understood that the first PMI included in the first indication information is configured to determine the phase shift matrix of the first network device.

Optionally, the weighting coefficient may be a real number or a complex number. The weighting coefficient is a complex number, indicating that information of magnitude and phase is included in the weighting coefficient.

In embodiments of the present application, the first indication information is determined by the second network device based on the incidence angle information between the second network device and the first network device, and the channel feedback information sent by the terminal device.

The incidence angle information between the second network device and the first network device is information about an angle of incidence at which a signal from the second network device is incident on a surface of the first network device. The channel feedback information sent by the terminal device is determined and sent by the terminal device to the second network device according to the received reference signal, and is capable of providing feedback on information of the channel between the first network device and the terminal device.

In embodiments of the present application, the first network device may determine, according to a protocol pre-specification or a configuration indication of the second network device, that the determination of the first indication information takes into account incidence angle information between the second network device and the first network device; and the first network device may directly determine the phrase shift matrix according to the first indication information, without the need to take into account the incidence angle information.

In step 304, a reference phrase shift matrix is determined according to the first indication information.

In embodiments of the present application, the first network device may determine one reference phase shift matrix according to the received first indication information.

It should be noted that the reference phase shift matrix is determined according to the first indication information sent by the second network device, and the first indication information is generated by the second network device based on the assumption that the phase of each unit in the first network device is continuously adjustable. However, the phase offset values supported by the first network device are several discrete values, rather than continuous, and the phase of each unit in the first network device is not continuously adjustable. That is, the phase of each unit in the first network device correspondingly configured by the reference phase shift matrix may not be supported by the first network device.

In embodiments of the present application, the first indication information is determined by the second network device based on the incidence angle information between the second network device and the first network device, and the channel feedback information sent by the terminal device, and the first indication information received by the first network device may include at least one first PMI, and a weighting coefficient corresponding to each first PMI.

It could be understood that if the first indication information only includes one first PMI, the weighting coefficient corresponding to the first PMI is 1.

In some embodiments, the first indication information includes one first PMI, and the first network device determines the precoding matrix correspondingly indicated by the first PMI as the reference phase shift matrix.

In some embodiments, the first indication information includes a plurality of first PMIs and a weighting coefficient corresponding to each first PMI, and the first network device can perform a weighted combination of the precoding matrix correspondingly indicated by each first PMI according to the weighting coefficient corresponding to each first PMI, and obtain the reference phrase shift matrix.

It could be understood that when performing the weighted combination, the weighting coefficient used for the precoding matrix correspondingly indicated by each first PMI is the weighting coefficient corresponding to the first PMI indicative of the precoding matrix.

In step 305, the reference phrase shift matrix is quantized according to a phrase offset value supported by the first network device, and a phrase shift matrix of the first network device is obtained.

In embodiments of the present application, since the phase shift values supported by the first network device, are several discrete values and not continuous, the phase of each unit in the first network device correspondingly configured by the reference phase shift matrix may be not supported by the first network device. Thus, the first network device can quantize the reference phase shift matrix according to its own supported phase shift values to obtain the phase shift matrix (i.e., the phase shift matrix that is ultimately actually used) of the first network device.

The phase shift matrix of the first network device is used to configure a phase of each unit in the first network device, that is, to precode the first network device. The first network device can configure and adjust the phase of each of its own units according to the phase shift matrix to realize the precoding of the first network device.

In step 306, a signal incident on a surface of the first network device is reflected or transmitted according to the phrase shift matrix.

In embodiments of the present application, the first network device, after determining the phase shift matrix, can configure and adjust the phase of each unit in the first network device according to the phase shift matrix, and reflect or transmit the signal incident on the surface of the first network device based on the adjusted phase.

In summary, the reference signal configuration information sent by the second network device is received; the reference signal is sent to the terminal device according to the reference signal configuration information; the first indication information sent by the second network device is received; the reference phrase shift matrix is determined according to the first indication information; the reference phrase shift matrix is quantized according to the phrase offset value supported by the first network device, and the phrase shift matrix of the first network device is obtained, such that the base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

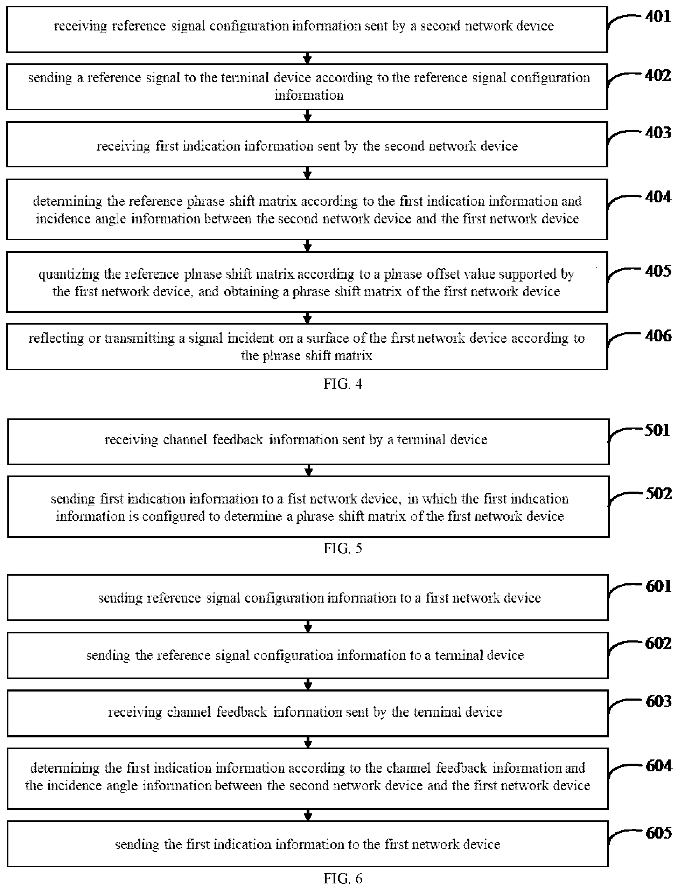

Please refer to FIG. 4, and FIG. 4 is a flow chart of a method for precoding based on a reconfigurable intelligent surface provided by an embodiment of the present application. It should be noted that a method for precoding based on a reconfigurable intelligent surface of the embodiments of the present application is performed by a first network device. The method may be performed independently or in conjunction with any of the other embodiments of the present application. As illustrated in FIG. 4, the method may include following steps.

In step 401, reference signal configuration information sent by a second network device is received.

In embodiments of the present application, the first network device may be a reconfigurable intelligent surface (RIS).

In embodiments of the present application, the first network device can receive the reference signal configuration information sent by the second network device, and determine the reference signal to be sent to the terminal device according to the reference signal configuration information.

Optionally, the reference signal configuration information includes at least one of:
a unit in the first network device occupied by the reference signal;
generation information of a sequence of the reference signals;
a serial number of an antenna port occupied by the reference signal; or
a time and frequency resource occupied by the reference signal.

The first network device can determine the reference signal to be sent to the terminal device according to the reference signal configuration information.

In step 402, a reference signal is sent to a terminal device according to the reference signal configuration information.

In embodiments of the present application, the first network device may determine the reference signal according to the received reference signal configuration information, and send the reference signal to the terminal device.

The reference signal is configured for the terminal device to estimate a channel between the first network device and the terminal device to obtain the channel feedback information. That is, the terminal device, after receiving the reference signal sent by the first network device, can perform channel estimation based on the reference signal to obtain the channel feedback information of the channel between the first network device and the terminal device.

In embodiments of the present application, optionally, the channel feedback information includes at least one of:
second indication information, in which the second indication information includes a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

Additionally, it could be understood that in embodiments of the present application, the first network device may have a portion of active units, can send the reference signal to the terminal device in accordance with the reference signal configuration information.

In step 403, first indication information sent by the second network device is received.

In embodiments of the present application, the first network device can receive the first indication information sent by the second network device, and the first indication information includes at least one first PMI, and a weighting coefficient corresponding to each first PMI.

It could be understood that if the first indication information only includes one first PMI, the weighting coefficient corresponding to the first PMI is 1.

It could be understood that the first PMI included in the first indication information is configured to determine the phase shift matrix of the first network device.

Optionally, the weighting coefficient may be a real number or a complex number. The weighting coefficient is a complex number, indicating that information of magnitude and phase is included in the weighting coefficient.

In embodiments of the present application, the first indication information is determined by the second network device based on the channel feedback information sent by the terminal device.

The channel feedback information sent by the terminal device is determined and sent by the terminal device to the second network device according to the received reference signal, and is capable of providing feedback on information of the channel between the first network device and the terminal device.

In embodiments of the present application, the first network device may determine, according to a protocol pre-specification or a configuration indication of the second network device, that the determination of the first indication information does not take into account incidence angle information between the second network device and the first network device; and the first network device needs to determine the phrase shift matrix according to the incidence angle information and the first indication information.

In step 404, a reference phrase shift matrix is determined according to the first indication information and the incidence angle information between the second network device and the first network device.

In embodiments of the present application, the first network device can determine one reference phase shift matrix according to the received first indication information, and the incidence angle information between the second network device and the first network device.

It should be noted that the reference phase shift matrix is determined according to the first indication information sent by the second network device, and the first indication information is generated by the second network device based on the assumption that the phase of each unit in the first network device is continuously adjustable. However, the phase offset values supported by the first network device are several discrete values, rather than continuous, and the phase of each unit in the first network device is not continuously adjustable. That is, the phase of each unit in the first network device correspondingly configured by the reference phase shift matrix may not be supported by the first network device.

In embodiments of the present application, the incident angle information may be sent by the second network device to the first network device, or may be measured by the first network device itself.

In some embodiments, the first network device can further receive the incidence angle information sent by the second network device.

In embodiments of the present application, the first indication information is determined by the second network device based on the channel feedback information sent by the terminal device, and the first indication information received by the first network device may include at least one first PMI, and a weighting coefficient corresponding to each first PMI.

It could be understood that if the first indication information only includes one first PMI, the weighting coefficient corresponding to the first PMI is 1.

In some embodiments, the first indication information includes one first PMI, and the first network device can determine the reference phase shift matrix according to a precoding matrix and a weighting coefficient corresponding to the first PMI, and the incidence angle information between the second network device and the first network device.

Optionally, the first network device can adjust the precoding matrix correspondingly indicated by the first PMI based on the incidence angle information, to obtain the reference phase shift matrix.

In some embodiments, the first indication information includes a plurality of first PMIs and a weighting coefficient corresponding to each first PMI, and the first network device can determine the reference phase shift matrix according to the precoding matrix and the weighting coefficient corresponding to each first PMI in the plurality of first PMIs and the incidence angle information between the second network device and the first network device.

Optionally, the first network device may perform a weighted combination of the precoding matrix corresponding to each first PMI in accordance with the weighting coefficient corresponding to each first PMI, and obtain a first matrix; and adjust the first matrix obtained by the weighted combination based on the incidence angle information and ultimately obtain the reference phrase shift matrix.

It could be understood that when performing the weighted combination, the weighting coefficient used for the precoding matrix correspondingly indicated by each first PMI is the weighting coefficient corresponding to the first PMI indicative of the precoding matrix.

In step 405, the reference phrase shift matrix is quantized according to a phrase offset value supported by the first network device, and a phrase shift matrix of the first network device is obtained.

In embodiments of the present application, since the phase shift values supported by the first network device, are several discrete values and not continuous, the phase of each unit in the first network device correspondingly configured by the reference phase shift matrix may be not supported by the first network device. Thus, the first network device can quantize the reference phase shift matrix according to its own supported phase shift values to obtain the phase shift matrix (i.e., the phase shift matrix that is ultimately actually used) of the first network device.

The phase shift matrix of the first network device is used to configure a phase of each unit in the first network device, that is, to precode the first network device. The first network device can configure and adjust the phase of each of its own units according to the phase shift matrix to realize the precoding of the first network device.

In step 406, a signal incident on a surface of the first network device is reflected or transmitted according to the phrase shift matrix.

In embodiments of the present application, the first network device, after determining the phase shift matrix, can configure and adjust the phase of each unit in the first network device according to the phase shift matrix, and reflect or transmit the signal incident on the surface of the first network device based on the adjusted phase.

In summary, the reference signal configuration information sent by the second network device is received; the reference signal is sent to the terminal device according to the reference signal configuration information; the first indication information sent by the second network device is received; the reference phrase shift matrix is determined according to the first indication information and the incidence angle information between the second network device and the first network device; the reference phrase shift matrix is quantized according to the phrase offset value supported by the first network device, and the phrase shift matrix of the first network device is obtained, such that the base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

Please refer to FIG. 5, and FIG. 5 is a flow chart of a method for precoding based on a reconfigurable intelligent surface provided by an embodiment of the present application. It should be noted that the method for precoding based on a reconfigurable intelligent surface of an embodiment of the present application is performed by a second network device. The method may be performed independently or in conjunction with any of the other embodiments of the present application. As illustrated in FIG. 5, the method may include following steps.

In step 501, channel feedback information sent by a terminal device is received.

In embodiments of the present application, the second network device can receive channel feedback information sent by the terminal device, the channel feedback information is determined by the terminal device based on the reference signal sent by the first network device, and the channel feedback information is configured to determine the first indication information.

The channel feedback information is obtained by the terminal device estimating the channel between the first network device and the terminal device according to the received reference signal, and is information capable of providing feedback on the channel between the first network device and the terminal device.

In embodiments of the present application, the first network device may be a reconfigurable intelligent surface (RIS).

Optionally, the channel feedback information includes at least one of:
second indication information, in which the second indication information includes a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

In some embodiments, the second network device may receive channel feedback information sent by at least one terminal device.

In embodiments of the present application, the second network device can further send the reference signal configuration information to the first network device and the terminal device. The first network device can send the reference signal to the terminal device according to the reference signal configuration information, and the terminal device can receive the reference signal sent by the first network device according to the reference signal configuration information.

Optionally, the reference signal configuration information includes at least one of:
a unit in the first network device occupied by the reference signal;
generation information of a sequence of the reference signals;
a serial number of an antenna port occupied by the reference signal; or
a time and frequency resource occupied by the reference signal.

It should be noted that the channel used by the second network device to send the reference signal configuration information to the terminal device, and the channel used by the second network device to receive the channel feedback information sent by the terminal device, may both be a channel passing through the first network device or a line-of-sight channel that does not pass through the first network device, which is not limited by the present application.

In some embodiments, the second network device may determine the first indication information according to the channel feedback information sent by the terminal device, and the incidence angle information between the second network device and the first network device.

The incidence angle information between the second network device and the first network device is information about an angle of incidence at which a signal from the second network device is incident on a surface of the first network device.

In some embodiments, the second network device may determine the first indication information according to the channel feedback information sent by the terminal device.

In embodiments of the present application, the first indication information determined by the second network device is configured to determine the phase shift matrix of the first network device.

In step 502, first indication information is sent to a first network device, in which the first indication information is configured to determine a phrase shift matrix of the first network device.

In embodiments of the present application, the second network device can send the first indication information to the first network device, and the first indication information is configured to determine the phase shift matrix of the first network device.

The phase shift matrix of the first network device is used to configure a phase of each unit in the first network device, that is, to precode the first network device. The first network device can configure and adjust the phase of each of its own units according to the phase shift matrix to achieve precoding of the first network device, and can reflect or transmit the signal incident on the surface of the first network device.

In some embodiments, the first indication information is configured to determine one reference phase shift matrix, and the phase shift matrix of the first network device (i.e., the phase shift matrix that is ultimately actually used), is obtained by quantizing the reference phase shift matrix according to the phase offset value supported by the first network device.

It could be understood that the phase offset values supported by the first network device are several discrete values, rather than continuous, and the phase of each unit in the first network device is not continuously adjustable.

It should be noted that the reference phase shift matrix is determined according to the first indication information sent by the second network device, and the first indication information is generated by the second network device based on the assumption that the phase of each unit in the first network device is continuously adjustable, that is, the phase of each unit in the first network device correspondingly configured by the reference phase shift matrix may not be supported by the first network device. Thus, the first network device can quantize the reference phase shift matrix according to its own supported phase offset values to obtain the phase shift matrix of the first network device.

In embodiments of the present application, the first indication information includes at least one first PMI, and a weighting coefficient corresponding to each first PMI.

It could be understood that if the first indication information only includes one first PMI, the weighting coefficient corresponding to the first PMI is 1.

It could be understood that the first PMI included in the first indication information is configured to determine the phase shift matrix of the first network device.

Optionally, the weighting coefficient may be a real number or a complex number. The weighting coefficient is a complex number, indicating that information of magnitude and phase is included in the weighting coefficient.

In some embodiments, the second network device may determine the first indication information according to the channel feedback information sent by the terminal device, and the incidence angle information between the second network device and the first network device.

As a possible implementation, the first indication information includes one first PMI, and the reference phase shift matrix is a precoding matrix correspondingly indicated by the first PMI.

As another possible implementation, the first indication information includes a plurality of first PMIs and a weighting coefficient corresponding to each first PMI, and the reference phrase shift matrix is obtained by the first network device performing weighted combination of a precoding matrix correspondingly indicated by each first PMI in accordance with the weighting coefficient corresponding to each first PMI.

In some embodiments, the second network device may determine the first indication information according to the channel feedback information sent by the terminal device.

As a possible implementation, the first indication information includes one first PMI, and the reference phase shift matrix is determined by the first network device according to a precoding matrix and a weighting coefficient corresponding to the first PMI and the incidence angle information between the second network device and the first network device.

Optionally, the reference phase shift matrix is obtained by the first network device adjusting the precoding matrix corresponding to the first PMI based on the incidence angle information between the second network device and the first network device.

As another possible implementation, the first indication information includes a plurality of first PMIs and a weighting coefficient corresponding to each first PMI, and the reference phrase shift matrix is determined by the first network device according to the precoding matrix and the weighting coefficient corresponding to each first PMI in plurality of first PMIs and the incidence angle information between the second network device and the first network device.

Optionally, the reference phrase shift matrix is obtained by the first network device adjusting the first matrix based on the incidence angle information between the second network device and the first network device. The first matrix is obtained by the first network device performing the weighted combination of the precoding matrix correspondingly indicated by each first PMI in accordance with the weighting coefficient corresponding to each first PMI.

Optionally, the second network device may send the incidence angle information to the first network device.

It could be understood that when performing the weighted combination, the weighting coefficient used for the precoding matrix correspondingly indicated by each first PMI is the weighting coefficient corresponding to the first PMI indicative of the precoding matrix.

In embodiments of the present application, the incidence angle information between the second network device and the first network device is information about an angle of incidence at which a signal from the second network device is incident on a surface of the first network device.

In summary, the channel feedback information sent by the terminal device is received; the first indication information is sent to the first network device, in which the first indication information is configured to determine the phrase shift matrix of the first network device, such that the base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

Please refer to FIG. 6, and FIG. 6 is a flow chart of a method for precoding based on a reconfigurable intelligent surface provided by an embodiment of the present application. It should be noted that the method for precoding based on a reconfigurable intelligent surface of an embodiment of the present application is performed by a second network device. The method may be performed independently or in conjunction with any of the other embodiments of the present application. As illustrated in FIG. 6, the method may include following steps.

In step 601, reference signal configuration information is sent to a first network device.

In embodiments of the present application, the second network device can send reference signal configuration information to the first network device, the reference signal configuration information is configured for the first network device to send the reference signal, and the reference signal is configured for the terminal device to determine channel feedback information for a channel between the first network device and the terminal device. The first network device can determine the reference signal according to the reference signal configuration information and send the reference signal to the terminal device, and the terminal device can determine channel feedback information according to the received reference signal.

In embodiments of the present application, the first network device may be a reconfigurable intelligent surface (RIS).

Optionally, the reference signal configuration information includes at least one of:
a unit in the first network device occupied by the reference signal;
generation information of a sequence of the reference signals;
a serial number of an antenna port occupied by the reference signal; or
a time and frequency resource occupied by the reference signal.

In step 602, the reference signal configuration information is sent to a terminal device.

In embodiments of the present application, the second network device can further send the reference signal configuration information to the terminal device, and the reference signal configuration information is configured for the terminal device to receive the reference signal sent by the first network device.

It could be understood that the reference signal sent by the first network device is also determined based on the reference signal configuration information. That is, the reference signal configuration information sent in step 601 and step 602 is the same.

It should be noted that the channel used by the second network device to send the reference signal configuration information to the terminal device may be a channel passing through the first network device or a line-of-sight channel that does not pass through the first network device, which is not limited by the present application.

In step 603, channel feedback information sent by a terminal device is received.

In embodiments of the present application, the second network device can receive channel feedback information sent by the terminal device.

The channel feedback information is obtained by the terminal device estimating the channel between the first network device and the terminal device based on the received reference signal sent by the first network device, and is capable of providing feedback on information related to the channel between the first network device and the terminal device.

Optionally, the channel feedback information includes at least one of:
second indication information, in which the second indication information includes a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

It should be noted that the channel used by the second network device to send the reference signal configuration information to the terminal device may be a channel passing through the first network device or a line-of-sight channel that does not pass through the first network device, which is not limited by the present application.

In step 604, first indication information is determined according to the channel feedback information and incidence angle information between the second network device and the first network device.

In embodiments of the present application, the second network device can determine the first indication information according to the received channel feedback information, and the incidence angle information between the second network device and the first network device. The first indication information is configured to determine the phrase shift matrix of the first network device.

The phase shift matrix of the first network device is used to configure a phase of each unit in the first network device, that is, to precode the first network device. The first network device can configure and adjust the phase of each of its own units according to the phase shift matrix to achieve precoding of the first network device, and can reflect or transmit the signal incident on the surface of the first network device.

In embodiments of the present application, the incidence angle information between the second network device and the first network device is information on the angle of incidence at which a signal from the second network device is incident on the surface of the first network device.

In embodiments of the present application, the first indication information includes at least one first PMI, and a weighting coefficient corresponding to each first PMI.

It could be understood that if the first indication information only includes one first PMI, the weighting coefficient corresponding to the first PMI is 1.

It could be understood that the first PMI included in the first indication information is configured to determine the phase shift matrix of the first network device.

Optionally, the weighting coefficient may be a real number or a complex number. The weighting coefficient is a complex number, indicating that information of magnitude and phase is included in the weighting coefficient.

In some embodiments, the first indication information is configured to determine one reference phase shift matrix, and the phase shift matrix of the first network device (i.e., the phase shift matrix that is ultimately actually used), is obtained by quantizing the reference phase shift matrix according to the phase offset value supported by the first network device.

It could be understood that the phase offset values supported by the first network device are several discrete values, rather than continuous, and the phase of each unit in the first network device is not continuously adjustable.

It should be noted that the reference phase shift matrix is determined according to the first indication information sent by the second network device, and the first indication information is generated by the second network device based on the assumption that the phase of each unit in the first network device is continuously adjustable, that is, the phase of each unit in the first network device correspondingly configured by the reference phase shift matrix may not be supported by the first network device. Thus, the first network device can quantize the reference phase shift matrix according to its own supported phase offset values to obtain the phase shift matrix of the first network device.

In some embodiments, the second network device may receive channel feedback information sent by at least one terminal device.

In step 605, the first indication information is sent to the first network device.

In embodiments of the present application, the second network device can send the first indication information to the first network device. The first indication information is configured to determine the phrase shift matrix of the first network device.

In some embodiments, the first indication information is configured to determine one reference phase shift matrix, and the phase shift matrix of the first network device (i.e., the phase shift matrix that is ultimately actually used), is obtained by quantizing the reference phase shift matrix according to the phase offset value supported by the first network device.

In some embodiments, the first indication information includes one first PMI, and the reference phase shift matrix is a precoding matrix correspondingly indicated by the first PMI.

In some embodiments, the first indication information includes a plurality of first PMIs and a weighting coefficient corresponding to each first PMI, and the reference phrase shift matrix is obtained by the first network device performing weighted combination of the precoding matrix correspondingly indicated by each first PMI in accordance with the weighting coefficient corresponding to each first PMI.

It could be understood that when performing the weighted combination, the weighting coefficient used for the precoding matrix correspondingly indicated by each first PMI is the weighting coefficient corresponding to the first PMI indicative of the precoding matrix.

In summary, the reference signal configuration information is sent to the first network device; the reference signal configuration information is sent to the terminal device; the channel feedback information sent by the terminal device is received; the first indication information is determined according to the channel feedback information and the incidence angle information between the second network device and the first network device; and the first indication information is sent to the first network device, such that the base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

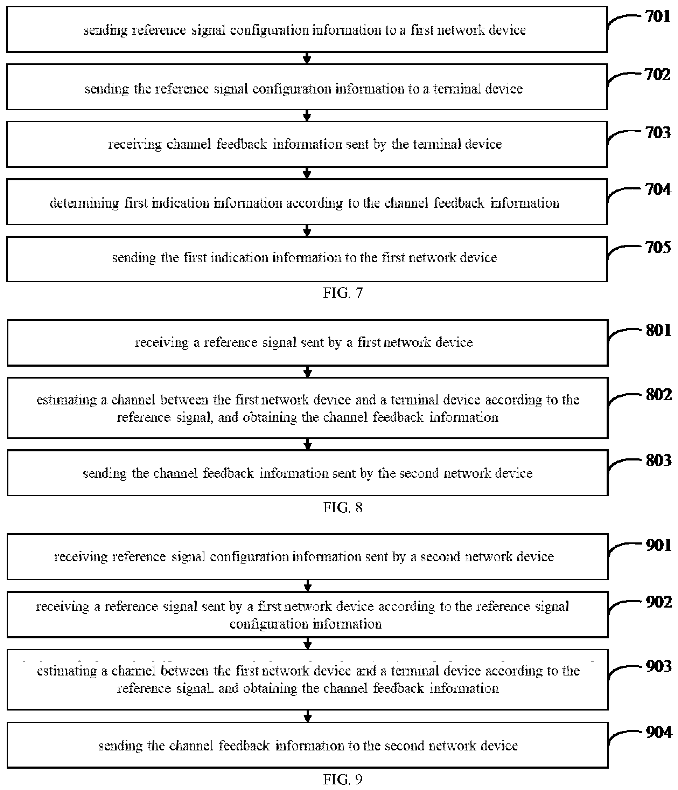

Please refer to FIG. 7, and FIG. 7 is a flow chart of a method for precoding based on a reconfigurable intelligent surface provided by an embodiment of the present application. It should be noted that the method for precoding based on a reconfigurable intelligent surface of an embodiment of the present application is performed by a second network device. The method may be performed independently or in conjunction with any of the other embodiments of the present application. As illustrated in FIG. 7, the method may include following steps.

In step 701, reference signal configuration information is sent to a first network device.

In embodiments of the present application, the second network device can send the reference signal configuration information to the first network device, the reference signal configuration information is configured for the first network device to send the reference signal to the terminal device, and the reference signal is configured for the terminal device to determine the channel feedback information for a channel between the first network device and the terminal device. The first network device can determine the reference signal according to the reference signal configuration information and send the reference signal to the terminal device, and the terminal device can determine channel feedback information according to the received reference signal.

In embodiments of the present application, the first network device may be a reconfigurable intelligent surface (RIS).

Optionally, the reference signal configuration information includes at least one of:
a unit in the first network device occupied by the reference signal;
generation information of a sequence of the reference signals;
a serial number of an antenna port occupied by the reference signal; or
a time and frequency resource occupied by the reference signal.

In step 702, the reference signal configuration information is sent to a terminal device.

In embodiments of the present application, the second network device can further send the reference signal configuration information to the terminal device, and the reference signal configuration information is configured for the terminal device to receive the reference signal sent by the first network device.

It could be understood that the reference signal sent by the first network device is also determined based on the reference signal configuration information. That is, the reference signal configuration information sent in step 701 and step 702 is the same.

It should be noted that the channel used by the second network device to send the reference signal configuration information to the terminal device may be a channel passing through the first network device or a line-of-sight channel that does not pass through the first network device, which is not limited by the present application.

In step 703, channel feedback information sent by a terminal device is received.

In embodiments of the present application, the second network device can receive channel feedback information sent by the terminal device.

The channel feedback information is obtained by the terminal device estimating the channel between the first network device and the terminal device based on the received reference signal sent by the first network device, and is capable of providing feedback on information related to the channel between the first network device and the terminal device.

Optionally, the channel feedback information includes at least one of:
second indication information, in which the second indication information includes a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

It should be noted that the channel used by the second network device to send the reference signal configuration information to the terminal device may be a channel passing through the first network device or a line-of-sight channel that does not pass through the first network device, which is not limited by the present application.

In step 704, first indication information is determined according to the channel feedback information.

In embodiments of the present application, the second network device can determine the first indication information according to the received channel feedback information. The first indication information is configured to determine the phrase shift matrix of the first network device.

The phase shift matrix of the first network device is used to configure a phase of each unit in the first network device, that is, to precode the first network device. The first network device can configure and adjust the phase of each of its own units according to the phase shift matrix to achieve precoding of the first network device, and can reflect or transmit the signal incident on the surface of the first network device.

In embodiments of the present application, the first indication information includes at least one first PMI, and a weighting coefficient corresponding to each first PMI.

It could be understood that if the first indication information only includes one first PMI, the weighting coefficient corresponding to the first PMI is 1.

It could be understood that the first PMI included in the first indication information is configured to determine the phase shift matrix of the first network device.

Optionally, the weighting coefficient may be a real number or a complex number. The weighting coefficient is a complex number, indicating that information of magnitude and phase is included in the weighting coefficient.

In some embodiments, the first indication information is configured to determine one reference phase shift matrix, and the phase shift matrix of the first network device (i.e., the phase shift matrix that is ultimately actually used), is obtained by quantizing the reference phase shift matrix according to the phase offset value supported by the first network device.

It could be understood that the phase offset values supported by the first network device are several discrete values, rather than continuous, and the phase of each unit in the first network device is not continuously adjustable.

It should be noted that the reference phase shift matrix is determined according to the first indication information sent by the second network device, and the first indication information is generated by the second network device based on the assumption that the phase of each unit in the first network device is continuously adjustable, that is, the phase of each unit in the first network device correspondingly configured by the reference phase shift matrix may not be supported by the first network device. Thus, the first network device can quantize the reference phase shift matrix according to its own supported phase offset values to obtain the phase shift matrix of the first network device.

In some embodiments, the second network device may receive channel feedback information sent by the at least one terminal device and determine the first indication information according to the received channel feedback information.

In step 705, the first indication information is sent to the first network device.

In embodiments of the present application, the second network device can send the first indication information to the first network device. The first indication information is configured to determine the phrase shift matrix of the first network device.

In some embodiments, the first indication information is configured to determine one reference phase shift matrix, and the phase shift matrix of the first network device (i.e., the phase shift matrix that is ultimately actually used), is obtained by quantizing the reference phase shift matrix according to the phase offset value supported by the first network device.

In some embodiments, the first indication information includes one first PMI, and the reference phrase shift matrix is determined by the first network device according to the precoding matrix and the weighting coefficient corresponding to the first PMI and the incidence angle information between the second network device and the first network device.

Optionally, the reference phase shift matrix is obtained by the first network device adjusting the precoding matrix corresponding to the first PMI based on the incidence angle information between the second network device and the first network device.

In some embodiments, the first indication information includes a plurality of first PMIs and a weighting coefficient corresponding to each first PMI, and the reference phrase shift matrix is determined by the first network device according to the precoding matrix and the weighting coefficient corresponding to each first PMI in the plurality of first PMIs and the incidence angle information between the second network device and the first network device.

Optionally, the reference phrase shift matrix is obtained by the first network device adjusting the first matrix based on the incidence angle information between the second network device and the first network device. The first matrix is obtained by the first network device performing the weighted combination of the precoding matrix correspondingly indicated by each first PMI in accordance with the weighting coefficient corresponding to each first PMI.

It could be understood that when performing the weighted combination, the weighting coefficient used for the precoding matrix correspondingly indicated by each first PMI is the weighting coefficient corresponding to the first PMI indicative of the precoding matrix.

In embodiments of the present application, the incidence angle information between the second network device and the first network device is information on the angle of incidence at which a signal from the second network device is incident on the surface of the first network device.

In some embodiments, the second network device may also send the incidence angle information to the first network device.

In summary, the reference signal configuration information is sent to the first network device; the reference signal configuration information is sent to the terminal device; the channel feedback information sent by the terminal device is received; the first indication information is determined according to the channel feedback information; and the first indication information is sent to the first network device, such that a base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

Please refer to FIG. 8, and FIG. 8 is a flow chart of a method for precoding based on a reconfigurable intelligent surface provided by an embodiment of the present application. It should be noted that the method for precoding based on a reconfigurable intelligent surface of embodiments of the present application is performed by a terminal device. The method may be performed independently or in conjunction with any of the other embodiments of the present application. As illustrated in FIG. 8, the method may include following steps.

In step 801, a reference signal sent by a first network device is received.

In embodiments of the present application, the terminal device can receive the reference signal sent by the first network device and perform channel estimation according to the reference signal. The reference signal is sent by the first network device based on the reference signal configuration information sent by the second network device.

In embodiments of the present application, the first network device may be a reconfigurable intelligent surface (RIS).

In some embodiments, the terminal device can receive reference signal configuration information sent by the second network device and receive a reference signal sent by the first network device according to the reference signal configuration information.

Optionally, the reference signal configuration information includes at least one of:
a unit in the first network device occupied by the reference signal;
generation information of a sequence of the reference signals;
a serial number of an antenna port occupied by the reference signal; or
a time and frequency resource occupied by the reference signal.

It could be understood that the reference signal configuration information sent by the second network device and received by the terminal device is the same as the reference signal configuration information used by the first network device to send the reference signal.

It should be noted that the channel used by the terminal device to receive the reference signal configuration information to the second network device may be a channel passing through the first network device or a line-of-sight channel that does not pass through the first network device, which is not limited by the present application.

In step 802, a channel between the first network device and a terminal device is estimated according to the reference signal, and channel feedback information is obtained.

In embodiments of the present application, the second network device can estimate a channel between the first network device and the terminal device according to the reference signal to obtain the channel feedback information for the channel.

Optionally, the channel feedback information includes at least one of:
second indication information, in which the second indication information includes a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

It should be noted that the method of channel estimation by the terminal device according to the received reference signal may be estimated by the least squares (LS) method, or the minimum mean square error (MMSE) method, or other estimation algorithms, etc., which is not limited by the present application.

In step 803, the channel feedback information is sent to a second network device.

In embodiments of the present application, the terminal device, after estimating a channel between the first network device and the terminal device and obtaining channel feedback information for the channel, can send the channel feedback information to the second network device.

The channel feedback information is configured to determine first indication information, and the first indication information is configured to determine the phase shift matrix of the first network device.

In embodiments of the present application, the first indication information includes at least one first PMI, and a weighting coefficient corresponding to each first PMI.

It could be understood that if the first indication information only includes one first PMI, the weighting coefficient corresponding to the first PMI is 1.

It could be understood that the first PMI included in the first indication information is configured to determine the phase shift matrix of the first network device.

Optionally, the weighting coefficient may be a real number or a complex number. The weighting coefficient is a complex number, indicating that information of magnitude and phase is included in the weighting coefficient.

It should be noted that the channel used by the terminal device to send the channel feedback information to the second network device may be a channel passing through the first network device or a line-of-sight channel that does not pass through the first network device, which is not limited by the present application.

In summary, the reference signal sent by the first network device is received; a channel between the first network device and the terminal device is estimated according to the reference signal and the channel feedback information is obtained; the channel feedback information is sent to the second network device, such that the base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

Please refer to FIG. 9, and FIG. 9 is a flow chart of a method for precoding based on a reconfigurable intelligent surface provided by an embodiment of the present application. It should be noted that the method for precoding based on a reconfigurable intelligent surface of embodiments of the present application is performed by a terminal device. The method may be performed independently or in conjunction with any of the other embodiments of the present application. As illustrated in FIG. 9, the method may include following steps.

In step 901, reference signal configuration information sent by a second network device is received.

In embodiments of the present application, the terminal device can receive reference signal configuration information sent by the second network device, and receive a reference signal sent by the first network device according to the reference signal configuration information.

Optionally, the reference signal configuration information includes at least one of:
a unit in the first network device occupied by the reference signal;
generation information of a sequence of the reference signals;
a serial number of an antenna port occupied by the reference signal; or
a time and frequency resource occupied by the reference signal.

It should be noted that the channel used by the terminal device to receive the reference signal configuration information to the second network device may be a channel passing through the first network device or a line-of-sight channel that does not pass through the first network device, which is not limited by the present application.

In step 902, a reference signal sent by a first network device is received according to the reference signal configuration information.

In embodiments of the present application, the terminal device can receive the reference signal sent by the first network device according to the received reference signal configuration information.

The reference signal sent by the first network device is determined based on the same reference signal configuration information. That is, the reference signal configuration information received by the terminal device and sent by the second network device is the same as the reference signal configuration information used by the first network device to send the reference signal.

In step 903, a channel between the first network device and a terminal device is estimated according to the reference signal, and channel feedback information is obtained.

In embodiments of the present application, the second network device can estimate a channel between the first network device and the terminal device according to the reference signal to obtain the channel feedback information for the channel. The channel feedback information can provide feedback to the second network device on information related to the channel between the first network device and the terminal device.

Optionally, the channel feedback information includes at least one of:
second indication information, in which the second indication information includes a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

It should be noted that the method of channel estimation by the terminal device according to the received reference signal may be estimated by the least squares (LS) method, or the minimum mean square error (MMSE) method, or other estimation algorithms, etc., which is not limited by the present application.

In step 904, the channel feedback information is sent to a second network device.

In embodiments of the present application, the terminal device, after estimating a channel between the first network device and the terminal device and obtaining channel feedback information for the channel, can send the channel feedback information to the second network device.

The channel feedback information is configured to determine first indication information, and the first indication information is configured to determine the phase shift matrix of the first network device.

In embodiments of the present application, the first indication information includes at least one first PMI, and a weighting coefficient corresponding to each first PMI.

It could be understood that if the first indication information only includes one first PMI, the weighting coefficient corresponding to the first PMI is 1.

It could be understood that the first PMI included in the first indication information is configured to determine the phase shift matrix of the first network device.

Optionally, the weighting coefficient may be a real number or a complex number. The weighting coefficient is a complex number, indicating that information of magnitude and phase is included in the weighting coefficient.

It should be noted that the channel used by the terminal device to send the channel feedback information to the second network device may be a channel passing through the first network device or a line-of-sight channel that does not pass through the first network device, which is not limited by the present application.

In summary, the reference signal configuration information sent by the second network device is received; the reference signal sent by the first network device is received according to the reference signal configuration information; the channel between the first network device and the terminal device is estimated according to the reference signal, and channel feedback information is obtained; and the channel feedback information is sent to the second network device, such that the base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

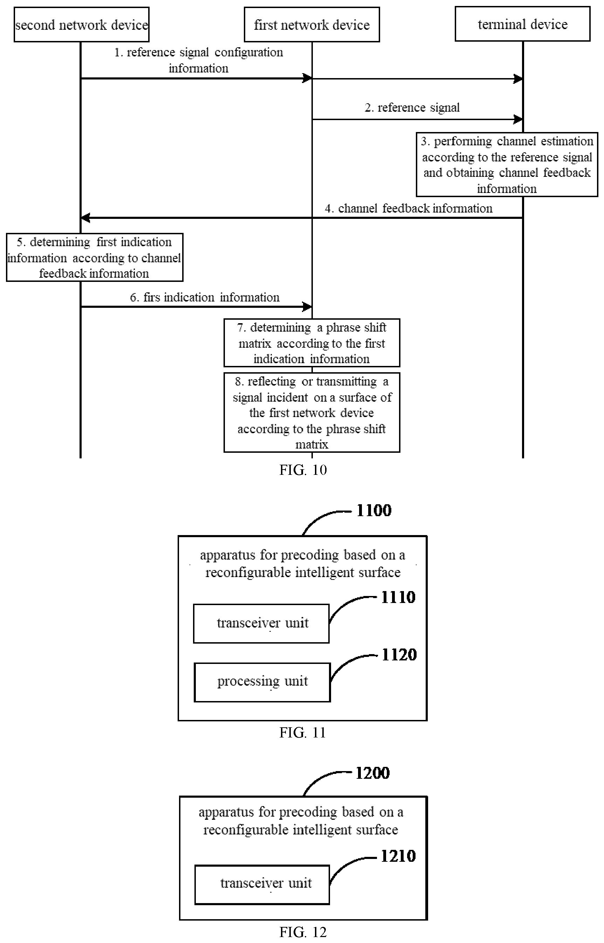

Please refer to FIG. 10, and FIG. 10 is a flow chart of a method for precoding based on a reconfigurable intelligent surface provided by an embodiment of the present application. The method may be performed independently or in conjunction with any of the other embodiments of the present application. As illustrated in FIG. 10, the method may include following steps.
1. The second network device sends reference signal configuration information to the first network device and the terminal device.
2. The first network device sends a reference signal to the terminal device according to the reference signal configuration information. The terminal device receives the reference signal sent by the first network device according to the reference signal configuration information.
3. The terminal device estimates the channel between the first network device and the terminal device according to the reference signal, and obtains channel feedback information.
4. Channel feedback information is sent to the second network device.
5. The second network device determines the first indication information according to the channel feedback information.

In some embodiments, the second network device determines the first indication information directly according to the channel feedback information.

Optionally, the second network device can further send the incidence angle information between the second network device and the first network device to the first network device.

In some embodiments, the second network device determines the first indication information according to the channel feedback information, and the incidence angle information between the second network device and the first network device.

6. The second network device sends the first indication information to the first network device.

7. The first network device determines a phase shift matrix according to the first indication information.

In some embodiments, the first network device determines a reference phase shift matrix according to the first indication information, and the incidence angle information between the second network device and the first network device, and then quantizes the reference phase shift matrix to obtain the phase shift matrix.

In some embodiments, the first network device determines the reference phase shift matrix directly according to the first indication information, and then quantizes the reference phase shift matrix to obtain the phase shift matrix.

8. The first network device reflects or transmits the signal incident on the surface of the first network device according to the phase shift matrix.

In summary, the method for precoding based on a reconfigurable intelligent surface provided by embodiments of the present application may enable a base station to control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

The present application also provides an apparatus for precoding based on a reconfigurable intelligent surface corresponding to the method for precoding based on a reconfigurable intelligent surface provided by the above several embodiments, and since the apparatus for precoding based on the reconfigurable intelligent surface provided in the embodiments of the present application corresponds to the method provided in the above several embodiments, the manner of implementing the method for precoding based on a reconfigurable intelligent surface is also applicable to the apparatus for precoding based on a reconfigurable intelligent surface provided in the following embodiments, which will not be described in detail in the following embodiments.

Please refer to FIG. 11, and FIG. 11 is a block schematic diagram of an apparatus for precoding based on a reconfigurable intelligent surface provided by an embodiment of the present application.

As illustrated in FIG. 11, the apparatus 1100 for precoding based on a reconfigurable intelligent surface includes a transceiver unit 1110 and a processing unit 1120.

The transceiver unit 1110 is configured to send a reference signal to a terminal device, in which the reference signal is configured for the terminal device to determine channel feedback information, and the channel feedback information is configured for the second network device to determine first indication information.

The transceiver unit 1110 is further configured to receive the first indication information sent by the second network device, in which the first indication information is configured to determine a phrase shift matrix of the first network device.

The processing unit 1120 is configured to determine the phrase shift matrix of the first network device according to the first indication information.

Optionally, the processing unit 1120 is specifically configured to determine a reference phrase shift matrix of the first network device according to the first indication information; and quantize the reference phrase shift matrix according to a phrase offset value supported by the first network device, and obtain the phrase shift matrix of the first network device.

Optionally, the first indication information includes at least one first precoding matrix indicator (PMI) and a weighting coefficient corresponding to each first precoding matrix indicator (PMI).

Optionally, the first indication information is determined by the second network device based on incidence angle information between the second network device and the first network device and the channel feedback information.

Optionally, the first indication information includes one first PMI, and the reference phrase shift matrix is a precoding matrix corresponding to the first PMI.

Optionally, the first indication information includes a plurality of first PMIs and a weighting coefficient corresponding to each first PMI, and the processing unit 1120 is specifically configured to perform weighted combination of a precoding matrix corresponding to each first PMI in accordance with the weighting coefficient corresponding to each first PMI, and obtain the reference phrase shift matrix.

Optionally, the first indication information is determined by the second network device based on the channel feedback information.

Optionally, the first indication information includes one first PMI, and the processing unit 1120 is specifically configured to determine the reference phrase shift matrix according to the precoding matrix corresponding to the first PMI, and the incidence angle information between the second network device and the first network device.

Optionally, the processing unit 1120 is specifically configured to adjust the precoding matrix corresponding to the first PMI based on the incidence angle information, and obtain the reference phrase shift matrix.

Optionally, the first indication information includes a plurality of first PMIs and a weighting coefficient corresponding to each first PMI, and the processing unit 1120 is specifically configured to determine the reference phrase shift matrix according to the precoding matrix and the weighting coefficient corresponding to each first PMI in the plurality of PMIs and the incidence angle information between the second network device and the first network device.

Optionally, the processing unit 1120 is specifically configured to perform the weighted combination of the precoding matrix corresponding to each first PMI in accordance with the weighting coefficient corresponding to each first PMI, and obtain a first matrix; and adjust the first matrix based on the incidence angle information, and obtain the reference phrase shift matrix.

Optionally, the transceiver unit 1110 is further configured to receive the incidence angle information sent by the second network device, or perceive the incidence angle information.

Optionally, the transceiver unit 1110 is further configured to receive reference signal configuration information sent by the second network device; and send the reference signal according to the reference signal configuration information.

Optionally, the reference signal configuration information includes at least one of: a unit in the first network device occupied by the reference signal; generation information of a sequence of the reference signals; a serial number of an antenna port occupied by the reference signal; or a time and frequency resource occupied by the reference signal.

Optionally, the channel feedback information includes at least one of: second indication information, in which the second indication information includes a second PMI, and the second PMI is configured to indicate a precoding matrix of a channel between the first network device and the terminal device; reference signal receiving power (RSRP); reference signal received quality (RSRQ); a received signal strength indicator (RSSI); or a signal to interference plus noise ratio (SINR).

Optionally, the first network device is a reconfigurable intelligent surface (RIS).

Optionally, the transceiver unit 1110 is further configured to reflect or transmit a signal incident on a surface of the first network device according to the phrase shift matrix.

The apparatus for precoding based on a reconfigurable intelligent surface of the present embodiment may send the reference signal to the terminal device; receive first indication information sent by the second network device, in which the first indication information is configured to determine a phrase shift matrix of the first network device; and determine the phrase shift matrix of the first network device according to the first indication information, such that a base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

Please refer to FIG. 12, and FIG. 12 is a block schematic diagram of an apparatus for precoding based on a reconfigurable intelligent surface provided by an embodiment of the present application.

As illustrated in FIG. 12, the apparatus 1200 for precoding based on a reconfigurable intelligent surface includes a transceiver unit 1210.

The transceiver unit 1210 is configured to receive channel feedback information sent by the terminal device, in which the channel feedback information is determined by the terminal device based on a reference signal sent by the first network device, and the channel feedback information is configured to determine first indication information.

The transceiver unit 1210 is further configured to send the first indication information to the first network device, and the first indication information is configured to determine a phrase shift matrix of the first network device.

Optionally, the first indication information is configured to determine a reference phrase shift matrix of the first network device; and the phrase shift matrix of the first network device is obtained by quantizing the reference phrase shift matrix according to the phrase offset value supported by the first network device.

Optionally, the first indication information includes at least one first precoding matrix indicator (PMI) and a weighting coefficient corresponding to each first precoding matrix indicator (PMI).

Optionally, the transceiver unit 1210 is further configured to send the reference signal configuration information to the first network device; the reference signal configuration information is configured to determine a reference signal sent by the first network device; and the reference signal is configured to determine channel feedback information of a channel between the terminal device and the first network device.

Optionally, the reference signal configuration information includes at least one of: a unit in the first network device occupied by the reference signal; generation information of a sequence of the reference signals; a serial number of an antenna port occupied by the reference signal; or a time and frequency resource occupied by the reference signal.

Optionally, the apparatus further includes a processing unit (not illustrated in the figures), and the processing unit is configured to determine the first indication information according to the channel feedback information and the incidence angle information between the second network device and the first network device.

Optionally, the first indication information includes one first PMI, and the reference phrase shift matrix is a precoding matrix corresponding to the first PMI.

Optionally, the first indication information includes a plurality of first PMIs and a weighting coefficient corresponding to each first PMI, and the reference phrase shift matrix is obtained by performing weighted combination of the precoding matrix corresponding to each first PMI in accordance with the weighting coefficient corresponding to each first PMI.

Optionally, the apparatus further includes a processing unit (not illustrated in the figures), and the processing unit is configured to determine the first indication information according to the channel feedback information.

Optionally, the first indication information includes one first PMI, and the reference phrase shift matrix is determined by the first network device according to the precoding matrix corresponding to the first PMI, and the incidence angle information between the second network device and the first network device.

Optionally, the reference phrase shift matrix is obtained by the first network device adjusting the precoding matrix corresponding to the first PMI according to the incidence angle information.

Optionally, the indication information includes a plurality of first PMIs and a weighting coefficient corresponding to each first PMI, and the reference phrase shift matrix is determined by the first network device according to the precoding matrix and the weighting coefficient corresponding to each first PMI in a plurality of first PMIs, and the incidence angle information between the second network device and the first network device.

Optionally, the reference phrase shift matrix is obtained by the first network device adjusting a first matrix based on the incidence angle information; and the first matrix is obtained by the first network device performing the weighted combination of the precoding matrix corresponding to each first PMI in accordance with the weighting coefficient corresponding to each first PMI.

Optionally, the transceiver unit 1210 is further configured to send the incidence angle information to the first network device.

Optionally, the channel feedback information includes at least one of: second indication information, in which the second indication information includes a second PMI, and the second PMI is configured to indicate a precoding matrix of a channel between the first network device and the terminal device; reference signal receiving power (RSRP); reference signal received quality (RSRQ); a received signal strength indicator (RSSI); or a signal to interference plus noise ratio (SINR).

Optionally, the first network device is a reconfigurable intelligent surface (RIS).

Optionally, the phrase shift matrix is configured for the first network device to reflect or transmit a signal incident on a surface of the first network device.

The apparatus for precoding based on the reconfigurable intelligent surface of the present embodiment may send the first indication information to the first network device by receiving the channel feedback information sent by the terminal device, and the first indication information is configured to determine the phrase shift matrix of the first network device, such that the base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

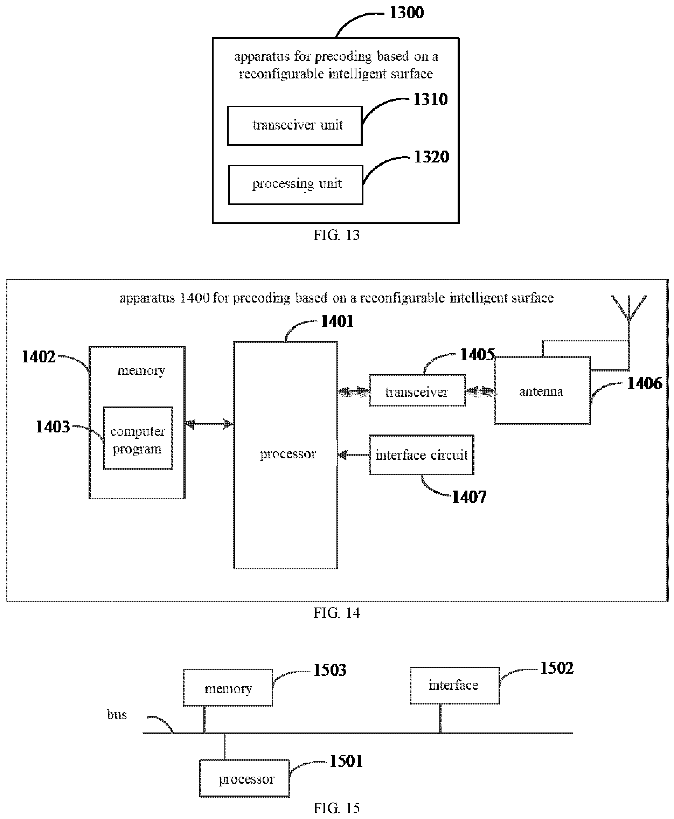

Please refer to FIG. 13, and FIG. 13 is a block schematic diagram of an apparatus for precoding based on a reconfigurable intelligent surface provided by an embodiment of the present application.

As illustrated in FIG. 13, the apparatus 1300 for precoding based on a reconfigurable intelligent surface includes a transceiver unit 1310 and a processing unit 1320.

The transceiver unit 1310 is configured to receive the reference signal sent by the first network device.

The processing unit 1320 is configured to estimate a channel between the first network device and the terminal device according to the reference signal, and obtain the channel feedback information.

The transceiver unit 1310 is further configured to send the channel feedback information to the second network device, the channel feedback information is configured to determine the first indication information, and the first indication information is configured to determine the phrase shift matrix of the first network device.

Optionally, the transceiver unit 1310 is further configured to receive reference signal configuration information sent by the second network device; and receive the reference signal according to the reference signal configuration information, in which the reference signal is sent by the first network device based on the reference signal configuration information.

Optionally, the first indication information includes at least one first precoding matrix indicator (PMI) and a weighting coefficient corresponding to each first precoding matrix indicator (PMI).

Optionally, the reference signal configuration information includes at least one of: a unit in the first network device occupied by the reference signal; generation information of a sequence of the reference signals; a serial number of an antenna port occupied by the reference signal; or a time and frequency resource occupied by the reference signal.

Optionally, the channel feedback information includes at least one of: second indication information, in which the second indication information includes a second PMI, and the second PMI is configured to indicate a precoding matrix of a channel between the first network device and the terminal device; reference signal receiving power (RSRP); reference signal received quality (RSRQ); a received signal strength indicator (RSSI); or a signal to interference plus noise ratio (SINR).

Optionally, the first network device is a reconfigurable intelligent surface (RIS).

The apparatus for precoding based on the reconfigurable intelligent surface of the present embodiment may receive the reference signal sent by the first network device; estimate a channel between the first network device and the terminal device according to the reference signal, and obtain the channel feedback information; and send the channel feedback information to the second network device, such that the base station can control the precoding of the reconfigurable intelligent surface based on channel information, which effectively reduces the complexity of the precoding based on the reconfigurable intelligent surface, improves the communication efficiency of the communication system assisted by the reconfigurable intelligent surface, and reduces the interference.

In order to realize the above embodiments, embodiments of the present application also provide a communication device including: a processor and a memory. The memory stores a computer program, and the processor executes the computer program stored in the memory to cause the device to perform the method illustrated in embodiments of FIGS. 2 to 4, or to perform the method illustrated in embodiments of FIGS. 5 to 7.

In order to realize the above embodiments, embodiments of the present application also provide a communication device including: a processor and a memory. The memory stores a computer program, and the processor executes the computer program stored in the memory to cause the device to perform the method illustrated in embodiments of FIGS. 8 to 9.

In order to realize the above embodiments, embodiments of the present application also provide a communication device including: a processor and an interface circuit. The interface circuit is configured to receive code instructions and transmit the code instructions to the processor, and the processor is configured to run the code instructions to perform the method illustrated in embodiments of FIGS. 2 to 6, or to perform the method illustrated in embodiments of FIGS. 5 to 7.

In order to realize the above embodiments, embodiments of the present application also provide a communication device including: a processor and an interface circuit. The interface circuit is configured to receive code instructions and transmit the code instructions to the processor, and the processor is configured to run the code instructions to perform the method illustrated in embodiments of FIGS. 8 to 9.

Please refer to FIG. 14, and FIG. 14 is a block schematic diagram of another apparatus for precoding based on a reconfigurable intelligent surface provided by an embodiment of the present application. The apparatus 1400 for precoding based on the reconfigurable intelligent surface may be a network device, a terminal device, a chip, a chip system, or a processor, etc. that supports the network device to realize the above-described method, or a chip, a chip system, or a processor, etc. that supports the terminal device to realize the above-described method. The apparatus may be configured to realize the methods described in the above method embodiments, and the details may be found in the description of the above method embodiments.

The apparatus 1400 for precoding based on the reconfigurable intelligent surface may include one or more processors 1401. The processor 1401 may be a general-purpose processor or a specific processor, etc. This may be, for example, a baseband processor or a central processor. The baseband processor may be used to process communication protocols as well as communication data, and the central processor may be used to control the apparatus for precoding based on a reconfigurable intelligent surface (e.g., base station, baseband chip, terminal device, terminal device chip, DU or CU, etc.), execute a computer program, and process data from the computer program.

Optionally, the apparatus 1400 for precoding based on a reconfigurable intelligent surface may also include one or more memories 1402, on which a computer program 1403 may be stored, and the processor 1401 executes the computer program 1403 to cause the apparatus 1400 for precoding based on a reconfigurable intelligent surface to perform the method described in the above method embodiments. The computer program 1403 may be solidified in the processor 1401, in which case the processor 1401 may be implemented by hardware.

Optionally, data may also be stored in the memory 1402. The apparatus 1400 for precoding based on a reconfigurable intelligent surface and the memory 1402 can be provided separately or integrated together.

Optionally, the apparatus 1400 for precoding based on a reconfigurable intelligent surface may also include a transceiver 1405 and an antenna 1406. The transceiver 1405 may be referred to as a transceiver unit, a transceiver machine, or a transceiver circuit, etc., and is used to implement the transceiving function. The transceiver 1405 may include a receiver and a transmitter, the receiver may be referred to as a receiving machine or a receiving circuit, etc., for implementing the receiving function, and the transmitter may be referred to as a transmitting machine or a transmitting circuit, etc., for implementing the transmitting function.

Optionally, the apparatus 1400 for precoding based on the reconfigurable intelligent surface may also include one or more interface circuits 1407. The interface circuit 1407 is configured to receive code instructions and transmit the code instructions to the processor 1401. The processor 1401 runs the code instructions to cause the apparatus 1400 for precoding based on the reconfigurable intelligent surface to perform the method described in the above method embodiments.

In an implementation, the processor 1401 may include a transceiver for implementing receiving and transmitting functions. The transceiver may, for example, be a transceiver circuit, or an interface, or an interface circuit. The transceiver circuit, interface or interface circuit used to implement the receiving and transmitting functions may be separate or integrated. The above transceiver circuit, interface or interface circuit may be used for code/data reading and writing, or, the above transceiver circuit, interface or interface circuit may be used for signal transmission or delivery.

In an implementation, the apparatus 1400 for precoding based on the reconfigurable intelligent surface may include a circuit, and the circuit may implement the functions of transmitting or receiving or communicating in the preceding method embodiments. The processor and transceiver described in the present application may be implemented on integrated circuits (ICs), analog ICs, radio frequency integrated circuits (RFICs), mixed-signal ICs, application specific integrated circuits (ASICs), printed circuit boards (PCBs), electronic devices, and the like. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The apparatus for precoding based on the reconfigurable intelligent surface in the description of above embodiments may be a network device or a terminal device, but the scope of the apparatus for precoding based on the reconfigurable intelligent surface described in the present application is not limited thereto, and the structure of the apparatus for precoding based on the reconfigurable intelligent surface may not be limited by FIGS. 11 to 13. The apparatus for precoding based on the reconfigurable intelligent surface may be a stand-alone device or may be part of a larger device. For example, the apparatus for precoding based on the reconfigurable intelligent surface may be:
(1) a stand-alone integrated circuit (IC), or chip, or, chip system or subsystem;
(2) a collection having one or more ICs, optionally, the collection of ICs may also include storage components for storing data, computer programs;
(3) ASIC, such as a modem;
(4) a module that can be embedded within other devices;
(5) a receiver, terminal device, smart terminal device, cellular phone, wireless device, handset, mobile unit, in-vehicle device, network device, cloud device, artificial intelligence device, and so on;
(6) Others, etc.

For the case where the apparatus for precoding based on the reconfigurable intelligent surface may be a chip or a chip system, see the block schematic diagram of the chip illustrated in FIG. 15. The chip illustrated in FIG. 15 includes a processor 1501 and an interface 1502. The number of processors 1501 may be one or more, and the number of interfaces 1502 may be more than one.

For the case where the chip is used to realize the functions of the terminal device in the embodiments of the present application:

The interface 1502 is configured to receive code instructions and transmit the code instructions to the processor.

The processor 1501 is configured to run the code instructions to perform the method illustrated in FIGS. 2 to 4, or the method illustrated in FIGS. 5 to 7.

For the case where the chip is used to realize the functions of the network device in the embodiments of the present application:

The interface 1502 is configured to receive code instructions and transmit the code instructions to the processor.

The processor 1501 is configured to run the code instructions to perform the method illustrated in FIGS. 8 to 9.

Optionally, the chip further includes a memory 1503, and the memory 1503 is configured to store necessary computer programs and data.

A person skilled in the art may also understand that the various illustrative logical blocks and steps set forth in the embodiments of the present application may be implemented by electronic hardware, computer software, or a combination of both. Whether such a function is realized in hardware or software depends on the specific application and the design requirements of the overall system. A person skilled in the art may, for each particular application, use a variety of functions that can be implemented using various methods, but such implementations should not be construed as being outside the scope of protection of the embodiments of the present application.

Embodiments of the present application also provide a communication system, the system including the apparatus for precoding based on the reconfigurable intelligent surface as a network device and the apparatus for precoding based on the reconfigurable intelligent surface as a terminal device in the forgoing embodiments illustrated in FIGS. 11 to 13, or, the system including the apparatus for precoding based on the reconfigurable intelligent surface as a terminal device and the apparatus for precoding based on the reconfigurable intelligent surface as a network device in the forgoing embodiment illustrated in FIG. 14.

The present application also provides a readable storage medium having stored thereon instructions which, when executed by a computer, realize the functions of any of the above method embodiments.

The present application also provides a computer program product which, when executed by a computer, realizes the functions of any of the above method embodiments.

In the above embodiments, this may be accomplished in whole or in part by software, hardware, firmware, or any combination thereof. When implemented using software, it may be implemented in whole or in part as a computer program product. A computer program product includes one or more computer programs. Loading and executing a computer program on a computer produces, in whole or in part, a process or function in accordance with embodiments of the present application. A computer may be a general-purpose computer, a specialized computer, a computer network, or other programmable device. A computer program may be stored in a computer-readable storage medium or transmitted from one computer-readable storage medium to another computer-readable storage medium, e.g., the computer program may be transmitted from one website site, computer, server, or data center to another website site, computer, server, or data center by wired (e.g., coaxial cable, fiber optics, digital subscriber line (DSL)) or wireless (e.g., infrared, wireless, microwave, etc.). A computer-readable storage medium may be any available medium to which a computer has access or a data storage device such as a server, data center, etc. that contains one or more available media integrated. The available media may be magnetic media (e.g., floppy disks, hard disks, tapes), optical media (e.g., high-density digital video discs (DVDs)), or semiconductor media (e.g., solid state disks (SSDs)), among others.

A person skilled in the art may understand that the first, second and other numbers involved in the present application are only described for the convenience of distinction, and are not used to limit the scope of the embodiments of the present application, but also indicate the order of precedence.

The at least one of the present application may also be described as one or more, and the plurality may be two, three, four, or more, without limitation of the present application. In embodiments of the present application, for a type of technical feature, the technical features in the type of technical feature are distinguished by "first", "second", "third", "A", "B", "C" and "D", etc., the technical features described by the "first", "second", "third", "A", "B", "C", and "D", are in no order of priority or size.

The correspondences shown in the tables in the present application can be configured or can be predefined. The values of the information in the tables are merely examples and may be configured to other values, which are not limited by the present application. When configuring the correspondence between the information and each parameter, it is not necessary to configure all the correspondences illustrated in each table. For example, the correspondence illustrated in certain rows in the tables in the present application may also not be configured. As another example, appropriate distortion adjustments may be made based on the above table, e.g., splitting, merging, etc. The names of the parameters shown in the headings in the above tables may also be other names understandable by the communication device, and the values or representations of the parameters thereof may also be other values or representations understandable by the communication device. Each of the above tables may also be implemented with other data structures, for example, an array, queue, container, stack, linear table, pointer, chain table, tree, graph, structure, class, heap, or hash table may be used.

Predefined in the present application may be understood as defined, pre-defined, stored, pre-stored, pre-negotiated, pre-configured, solidified, or pre-fired.

A person skilled in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. A person skilled in the art may use different methods for each particular application to achieve the described functionality, but such implementations should not be considered outside the scope of the present application.

It is clearly understood by those skilled in the field to which it belongs that, for the convenience and brevity of the description, the specific working processes of the above-described systems, apparatuses, and units can be referred to the corresponding processes in the foregoing embodiments of the method, and will not be repeated herein.

It should be understood that steps may be reordered, added, or deleted using various forms of the process shown above. For example, the steps recited in the embodiments of the present application may be performed in parallel or sequentially or in a different order, and are not limited herein as long as they are capable of realizing the desired results of the technical solutions disclosed in the present invention.

The above specific embodiments do not constitute a limitation on the scope of protection of the present invention. It should be appreciated by a person skilled in the art that various modifications, combinations, subcombinations, and substitutions can be made depending on design requirements and other factors. Any modifications, equivalent substitutions, improvements, and the like within the spirit and principle of the present invention should be included in the protection scope of the present invention.

## Claims

1. A method for precoding based on a reconfigurable intelligent surface, performed by a first network device, comprising:
sending a reference signal to a terminal device, wherein the reference signal is configured for the terminal device to determine channel feedback information, and the channel feedback information is configured for a second network device to determine first indication information;
receiving the first indication information sent by the second network device, wherein the first indication information is configured to determines a phrase shift matrix of the first network device; and
determining the phrase shift matrix of the first network device according to the first indication information.

2. The method according to claim 1, wherein determining the phrase shift matrix of the first network device according to the first indication information comprises:
determining a reference phrase shift matrix of the first network device according to the first indication information; and
quantizing the reference phrase shift matrix according to a phrase offset value supported by the first network device, and obtaining the phrase shift matrix of the first network device.

3. The method according to claim 2, wherein the first indication information comprises at least one first precoding matrix indicator (PMI) and a weighting coefficient corresponding to each first precoding matrix indicator (PMI).

4. The method according to claim 3, wherein the first indication information is determined by the second network device based on incidence angle information between the second network device and the first network device and the channel feedback information.

5. The method according to claim 4, wherein the first indication information comprises one first PMI, and the reference phrase shift matrix is a precoding matrix corresponding to the first PMI.

6. The method according to claim 4, wherein the first indication information comprises a plurality of first PMIs and a weighting coefficient corresponding to each first PMI, and determining the reference phrase shift matrix of the first network device according to the first indication information comprises:
performing a weighted combination of the precoding matrix corresponding to each first PMI in accordance with the weighting coefficient corresponding to each first PMI, and obtaining the reference phrase shift matrix.

7. The method according to claim 3, wherein the first indication information is determined by the second network device based on the channel feedback information.

8. The method according to claim 7, wherein the first indication information comprises one first PMI, and determining the reference phrase shift matrix of the first network device according to the first indication information comprises:
determining the reference phrase shift matrix according to a precoding matrix corresponding to the first PMI and incidence angle information between the second network device and the first network device.

9. The method according to claim 8, wherein determining the reference phrase shift matrix according to the precoding matrix corresponding to the first PMI and the incidence angle information between the second network device and the first network device comprises:
adjusting the precoding matrix corresponding to the first PMI based on the incidence angle information and obtaining the reference phrase shift matrix.

10. The method according to claim 7, wherein the first indication information comprises a plurality of first PMIs and a weighting coefficient corresponding to each first PMI, and determining the reference phrase shift matrix of the first network device according to the first indication information comprises:
determining the reference phrase shift matrix according to a precoding matrix and the weighting coefficient corresponding to each first PMI in the plurality of first PMIs and incidence angle information between the second network device and the first network device.

11. The method according to claim 10, wherein determining the reference phrase shift matrix according to the precoding matrix and the weighting coefficient corresponding to each first PMI in the plurality of first PMIs and the incidence angle information between the second network device and the first network device comprises:
performing a weighted combination of the precoding matrix corresponding to each first PMI in accordance with the weighting coefficient corresponding to each first PMI, and obtaining a first matrix; and
adjusting the first matrix based on the incidence angle information and obtaining the reference phrase shift matrix.

12. The method according to any one of claims 8 to 11, further comprising:
receiving the incidence angle information sent by the second network device; or
perceiving the incidence angle information.

13. The method according to claim 1, further comprising:
receiving reference signal configuration information sent by the second network device; and
sending the reference signal according to the reference signal configuration information.

14. The method according to claim 13, wherein the reference signal configuration information comprises at least one of:
a unit in the first network device occupied by the reference signal;
generation information of a sequence of the reference signals;
a serial number of an antenna port occupied by the reference signal; or
a time and frequency resource occupied by the reference signal.

15. The method according to claim 13, wherein the channel feedback information comprises at least one of:
second indication information, wherein the second indication information comprises a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

16. The method according to any one of claims 1 to 15, wherein the first network device is a reconfigurable intelligent surface (RIS).

17. The method according to any one of claims 1 to 15, further comprising:
reflecting or transmitting a signal incident on a surface of the first network device according to the phase shift matrix.

18. A method for precoding based on a reconfigurable intelligent surface, performed by a second network device, comprising:
receiving channel feedback information sent by a terminal device, wherein the channel feedback information is determined by the terminal device based on a reference signal sent by a first network device, and the channel feedback information is configured to determine first indication information; and
sending the first indication information to the first network device, wherein the first indication information is configured to determine a phrase shift matrix of the first network device.

19. The method according to claim 18, wherein the first indication information is configured to determine a reference phrase shift matrix of the first network device; and
the phrase shift matrix of the first network device is obtained by quantizing the reference phrase shift matrix according to a phrase offset value supported by the first network device.

20. The method according to claim 19, wherein the first indication information comprises at least one first precoding matrix indicator (PMI) and a weighting coefficient corresponding to each first precoding matrix indicator (PMI).

21. The method according to claim 20, further comprising:
sending reference signal configuration information to the first network device,
wherein the reference signal configuration information is configured to determine the reference signal sent by the first network device, and the reference signal is configured to determine the channel feedback information of a channel between the terminal device and the first network device.

22. The method according to claim 21, wherein the reference signal configuration information comprises at least one of:
a unit in the first network device occupied by the reference signal;
generation information of a sequence of the reference signals;
a serial number of an antenna port occupied by the reference signal; or
a time and frequency resource occupied by the reference signal.

23. The method according to claim 21, further comprising:
determining the first indication information according to the channel feedback information and incidence angle information between the second network device and the first network device.

24. The method according to claim 23, wherein the first indication information comprises one first PMI, and the reference phrase shift matrix is a precoding matrix corresponding to the first PMI.

25. The method according to claim 23, wherein the first indication information comprises a plurality of first PMIs and a weighting coefficient corresponding to each first PMI, and the reference phrase shift matrix is obtained by performing weighted combination of a precoding matrix corresponding to each first PMI in accordance with the weighting coefficient corresponding to each first PMI.

26. The method according to claim 21, further comprising:
determining the first indication information according to the channel feedback information.

27. The method according to claim 26, wherein the first indication information comprises one first PMI, and the reference phrase shift matrix is determined by the first network device according to a precoding matrix corresponding to the first PMI and incidence angle information between the second network device and the first network device.

28. The method according to claim 27, wherein the reference phrase shift matrix is determined by the first network device adjusting a precoding matrix corresponding to the first PMI based on the incidence angle information.

29. The method according to claim 26, wherein the first indication information comprises a plurality of first PMIs and a weighting coefficient corresponding to each first PMI, and the reference phrase shift matrix is determined by the first network device according to a precoding matrix and the weighting coefficient corresponding to each first PMI in the plurality of first PMIs and incidence angle information between the second network device and the first network device.

30. The method according to claim 29, wherein the reference phrase shift matrix is obtained by the first network device adjusting a first matrix based on the incidence angle information; and the first matrix is obtained by the first network device performing weighted combination of the precoding matrix corresponding to each first PMI in accordance with the weighting coefficient corresponding to each first PMI.

31. The method according to any one of claims 27 to 30, further comprising:
sending incidence angle information to the first network device.

32. The method according to claim 18, wherein the channel feedback information comprises at least one of:
second indication information, wherein the second indication information comprises a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

33. The method according to any one of claims 18 to 32, wherein the first network device is a reconfigurable intelligent surface (RIS).

34. The method according to any one of claims 18 to 32, wherein the phrase shift matrix is configured for the first network device to reflect or transmit a signal incident on a surface of the first network device.

35. A method for precoding based on a reconfigurable intelligent surface, performed by a terminal device, comprising:
receiving a reference signal sent by a first network device;
estimating a channel between the first network device and the terminal device based on the reference signal and obtaining channel feedback information; and
sending the channel feedback information to a second network device, wherein the channel feedback information is configured to determine first indication information, and the first indication information is configured to determine a phrase shift matrix of the first network device.

36. The method according to claim 35, further comprising:
receiving reference signal configuration information sent by the second network device; and
receiving the reference signal according to the reference signal configuration information, wherein the reference signal is sent by the first network device based on the reference signal configuration information.

37. The method according to claim 36, wherein the first indication information comprises at least one first precoding matrix indicator (PMI) and a weighting coefficient corresponding to each first precoding matrix indicator (PMI).

38. The method according to claim 36, wherein the reference signal configuration information comprises at least one of:
a unit in the first network device occupied by the reference signal;
generation information of a sequence of the reference signals;
a serial number of an antenna port occupied by the reference signal; or
a time and frequency resource occupied by the reference signal.

39. The method according to claim 36, wherein the channel feedback information comprises at least one of:
second indication information, wherein the second indication information comprises a second PMI, and the second PMI is configured to indicate a precoding matrix of a channel between the first network device and the terminal device;
reference signal receiving power (RSRP);
reference signal received quality (RSRQ);
a received signal strength indicator (RSSI); or
a signal to interference plus noise ratio (SINR).

40. The method according to any one of claims 35 to 39, wherein the first network device is a reconfigurable intelligent surface (RIS).

41. A communication system, comprising:
a first network device configured to perform the method according to any one of claims 1 to 17;
a second network device configured to perform the method according to any one of claims 18 to 34; and
a terminal device configured to perform the method according to any one of claims 35 to 40.
